# EUROPÄISCHE PATENTSCHRIFT

(11) **EP 2 862 268 B1**
(45) Veröffentlichungstag und Bekanntmachung des Hinweises auf die Patenterteilung: **05.12.2018**
(21) Anmeldenummer: 13745007.8
(22) Anmeldetag: 23.07.2013
(51) Int. Cl.: H02P 15/00, B61H 7/08

(54) **VORRICHTUNG UND VERFAHREN ZUM BREMSEN EINES ROTIERENDEN ELEMENTES EINER ANORDNUNG SOWIE ANORDNUNG MIT EINER DERARTIGEN VORRICHTUNG**
DEVICE AND METHOD FOR BRAKING A ROTATING ELEMENT OF AN ASSEMBLY, AND ASSEMBLY HAVING SUCH A DEVICE
DISPOSITIF ET PROCÉDÉ DE FREINAGE D'UN ÉLÉMENT ROTATIF D'UN ENSEMBLE ET ENSEMBLE POURVU D'UN DISPOSITIF DE CE TYPE

(30) Priorität: 01.08.2012 DE 102012213545
(43) Veröffentlichungstag der Anmeldung: 22.04.2015
(73) Patentinhaber: Siemens Mobility GmbH, 81739 München (DE)
(72) Erfinder: KOLBE, Andreas, 01069 Dresden (DE); ZEBUNKE, Stefan, 96199 Zapfendorf (DE)
(86) Internationale Anmeldenummer: PCT/EP2013/065496
(87) Internationale Veröffentlichungsnummer: WO 2014/019892

(56) Entgegenhaltungen:
- EP-A1- 0 603 038
- EP-A1- 0 863 604
- EP-A1- 2 364 889
- WO-A1-91/12657
- WO-A1-2004/012957
- DE-A1- 3 908 234
- DE-A1- 10 114 183

## Beschreibung

Die Erfindung betrifft eine Vorrichtung zum Bremsen eines rotierenden Elementes einer Anordnung, insbesondere zum Bremsen einer rotierenden Welle eines Schienenfahrzeugs, mit einer rotierenden Wirbelstrombremse, die einen drehfest mit dem rotierenden Element verbindbaren Rotor und einen an der Anordnung abstützbaren Stator aufweist, wobei der Stator mit zumindest einer im Bremsbetrieb von einer elektrische Energiequelle gespeisten Erregerspule versehen ist. Im Bremsbetrieb erzeugt die zumindest eine Erregerspule ein inhomogenes Magnetfeld, das im rotierenden Rotor Wirbelströme induziert, die ihrerseits ein dem inhomogenen Magnetfeld entgegen gesetztes Magnetfeld induzieren und damit eine den Rotor bremsende Kraft bewirken.

Derartige gattungsgemäße Vorrichtungen sind beispielsweise aus den Druckschriften DE 39 08 234 A1, DE 101 14 183 A1, EP 2 364 889 A1 und EP 0 863 604 A1 bekannt.

Außerdem ist aus der Druckschrift EP 0 863 604 A1 eine Steuer- und/oder Regelvorrichtung für eine Wirbelstrombremse bekannt, bei der zum Aufbau eines magnetischen Feldes Spulen der Wirbelstrombremse jeweils mit einem Anschluss über einen Leistungshalbleiter und einen nachfolgenden Messwiderstand mit einem Pol einer Stromquelle und mit dem anderen Anschluss an den anderen Pol der Stromquelle angeschlossen sind.

Weiterhin ist aus der Druckschrift EP 2 364 889 A1 eine Stromspeiseeinrichtung für eine Wirbelstrombremse bekannt, die die Möglichkeit bietet, einen einwandfreien Zustand ihrer Generatorwicklungen zu überprüfen, indem durch diese ein Strom geschickt wird.

Vorteile der rotierenden Wirbelstrombremse sind u. a. ihre Verschleißfreiheit, ihre Umweltfreundlichkeit, da sie praktisch keine Geräusche verursacht, und ihre Wartungsfreundlichkeit.

Der Erfindung liegt die Aufgabe zu Grunde, eine gattungsgemäße Vorrichtung anzugeben, die eine Diagnose des Zustandes der rotierenden Wirbelstrombremse ermöglicht. Insbesondere für den Einsatz einer rotierenden Wirbelstrombremse in Schienenfahrzeugen als Betriebsbremse und als sicherheitsrelevante anrechenbare Schnellbremse muss nämlich deren Zustand diagnostiziert werden können. Ein Ausfall oder ein Teilausfall einer rotierenden Wirbelstrombremse muss erkannt werden und entsprechende Maßnahmen zur Behebung des Ausfall oder des Teilausfalls, zum Beispiel Einleitung von Wartungsmaßnahmen, Ausgruppierung der fehlerhaften rotierenden Wirbelstrombremse oder sonstige Maßnahmen wie Beschränkung der maximalen Geschwindigkeit, müssen eingeleitet werden.

Wie die ordnungsgemäße technische Funktion einer rotierenden Wirbelstrombremse in Zukunft nachzuweisen ist, wurde bisher in Normen oder Zulassungsanforderungen noch nicht festgelegt, da diese Technologie auf Schienenfahrzeugen noch nicht im Einsatz ist. Als Anhaltspunkt können aber die Anforderungen an derzeit für Schienenfahrzeuge zugelassene Bremssysteme (z.B. an Druckluftbremsen, an Magnetschienenbremsen oder an lineare Wirbelstrombremsen) dienen.

Abgeleitet aus den Normen EN 16185 und EN 16207 könnte von folgenden Anforderungen hinsichtlich der technische Funktion einer rotierenden Wirbelstrombremse ausgegangen werden:
Durch eine Bremsprobe wäre zu bestätigen, dass alle Subsysteme der rotierenden Wirbelstrombremse richtig eingestellt sind, funktionsfähig sind und sich betriebsbereit melden.

Ist die rotierende Wirbelstrombremse Teil des Schnellbremsvermögens, müsste ihre ordnungsgemäße Funktion innerhalb einer manuellen oder automatischen Bremsprobe während des Fahrzeugstillstandes feststellbar sein. Dazu wäre die Prüfung der rotierenden Wirbelstrombremse in die Bremsprobe des Zuges einzubinden.

Während der Bremsprobe müssten alle rotierenden Wirbelstrombremsen eines Zuges von einem zentralen Punkt ansteuerbar und überwachbar sein. Für die ordnungsgemäße Funktion wäre ein Sicherheitsnachweis zu erbringen. In der Regel wäre dann eine Meldung auszugeben, dass die rotierenden Wirbelstrombremsen des Zuges in Ordnung sind. Eine gestörte rotierende Wirbelstrombremse wäre anzuzeigen, eine Warnung wäre auszugeben. Notwendige Maßnahmen, um den sicheren Bremsbetrieb nicht zu gefährden, wären dann zu ergreifen.

Gelöst wird die der Erfindung zu Grunde liegende Aufgabe bei der erfindungsgemäßen Vorrichtung mit den Merkmalen des Patentanspruches 1 durch Mittel zur Wirbelstromprüfung der rotierenden Wirbelstrombremse, die zumindest eine Prüfspule und eine mit der zumindest einen Prüfspule wirkverbundene elektrische Signalquelle aufweisen, wobei die elektrische Signalquelle die Prüfspule bei einer Diagnose mit einem Prüfsignal beaufschlagt, welches in dem Rotor Wirbelströme induziert, und die zumindest eine Messspule und einen mit der zumindest einen Messspule wirkverbundenen Signalempfänger aufweisen, wobei der Signalempfänger bei der Diagnose von der zumindest einen Messspule ein von den induzierten Wirbelströmen bewirktes und damit zur Diagnose der Wirbelstrombremse geeignetes Messsignal abgreift. - Mittel zur Wirbelstromprüfung elektrisch leitender Werkstoffe sind zwar an sich bereits bekannt (vgl. beispielsweise Dubbel, Taschenbuch für den Maschinenbau, 20. Aufl., Springer, 2001), bei der erfindungsgemäßen Vorrichtung ist jedoch darüber hinaus vorgesehen, dass die zumindest eine Erregerspule der Wirbelstrombremse die zumindest eine Prüfspule bildet und dass die zumindest eine Erregerspule und/oder eine weitere Erregerspule der Wirbelstrombremse die zumindest eine Messspule bildet.

Die Diagnose erfolgt also mit Hilfe der vorhandenen Erregerspule bzw. den vorhandenen Erregerspulen, zusätzliche Prüf und/oder Messspulen sind hierbei nicht erforderlich.

Vorteilhafte Ausführungsformen der erfindungsgemäßen Vorrichtung sind in den Unteransprüchen 2 bis 8 angegeben.

So kann beispielsweise vorgesehen sein, dass die elektrische Energiequelle der rotierenden Wirbelstrombremse die elektrische Signalquelle der Mittel zur Wirbelstromprüfung bildet, so dass in vorteilhafter Weise auch auf die Bereitstellung einer separaten elektrischen Signalquelle für die Wirbelstromprüfung verzichtet werden kann.

Alternativ hierzu kann aber auch vorgesehen sein, dass die elektrische Energiequelle der rotierenden Wirbelstrombremse separat zur elektrischen Signalquelle der Mittel zur Wirbelstromprüfung ausgebildet ist, da eine separate elektrische Signalquelle beispielsweise hinsichtlich der Gestaltung ihrer Prüfsignale mehr Möglichkeiten bieten kann.

Es wird als vorteilhaft angesehen, wenn die zumindest eine Erregerspule während zumindest einer ersten Diagnosephase die Prüfspule bildet, wobei der Signalempfänger während der zumindest einen ersten Diagnosephase das Prüfsignal der elektrischen Signalquelle erfasst, und wenn die zumindest eine Erregerspule während zumindest einer zweiten Diagnosephase, die zu der zumindest einen ersten Diagnosephase zeitlich versetzt ist, die zumindest eine Messspule bildet, wobei der Signalempfänger während der zumindest einen zweiten Diagnosephase das Messsignal erfasst. In vorteilhafter Weise wird hier also die Funktion der Wirbelstromprüfung durch den zeitlichen Versatz zwischen dem Einspeisen des Prüfsignals und dem Abgreifen des Messsignals realisiert. Dabei können Veränderungen gegenüber gespeicherten Referenzwerten erfasst werden, so dass anhand der Veränderungen des Messsignals ein Rückschluss auf Beschädigungen oder andere Veränderungen der zu diagnostizierenden rotierenden Wirbelstrombremse möglich ist. Außerdem kann durch das Messen des Prüfsignals während der ersten Diagnosephase und durch den Vergleich des gemessenen Prüfsignals mit einem zugeordneten gespeicherten Referenzwert, die elektrische Signalquelle als Fehlerquelle ausgeschlossen werden, wenn das gemessene Prüfsignal nicht in unzulässiger Weise vom zugeordneten gespeicherten Referenzwert abweicht.

Insbesondere wenn das Prüfsignal der elektrischen Signalquelle kein mit Pausen versehenes Pulsmuster sondern eine Wechselspannung als Prüfsignal ausgibt, ist der Einsatz eines Umschalters vorteilhaft, da mittels des Umschalters während der zumindest einen ersten Diagnosephase die elektrische Signalquelle und während der zumindest einen zweiten Diagnosephase der Signalempfänger an der zumindest einen Erregerspule angeschlossen sein können.

Ferner wird es als vorteilhaft angesehen, wenn die Erregerspulen bei der Diagnose die Prüfspulen und die Messspulen bilden, wobei zwei Widerstände und die Erregerspulen zu einer Vollbrücke zusammengeschaltet sind und wobei der Signalempfänger von der Vollbrücke das Messsignal in Form eines Differenzsignals abgreift. Alternativ hierzu wird es auch als vorteilhaft angesehen, wenn die Erregerspulen bei der Diagnose die Prüfspulen und die Messspulen bilden, wobei die Erregerspulen zu einer Vollbrücke zusammengeschaltet sind und wobei der Signalempfänger von der Vollbrücke das Messsignal in Form eines Differenzsignals abgreift. Hierbei handelt es sich um zwei besonders vorteilhafte Abgriffe der Messspannung, bei denen unter Ausnutzung von Symmetrieeigenschaften und unter Berücksichtigung abwechselnder Nord- und Südpole der Erregerspulen der Statoren Impedanzen und Impedanzänderungen sehr leicht ermittelt werden können.

Als vorteilhaft wird auch eine Auswerteeinheit angesehen, die zur Auswertung der Messsignale mit dem Signalempfänger wirkverbunden ist. Eine derartige Auswerteeinheit kann im Drehgestell eines Schienenfahrzeuges angeordnet sein und mit den elektrischen Signalquellen und den Signalempfängern aller

Mittel zur Wirbelstromprüfung eines Drehgestells zu einer baulichen Einheit (Diagnoseeinheit) zusammengefasst sein, wobei die Diagnoseeinheit über Verbindungen mit einem zentralen Steuer- und Überwachungsgerät sowie mit einer zentralen Energieversorgung des Schienenfahrzeugs verbunden sein kann.

Die Erfindung bezieht sich auch auf eine Anordnung mit einem rotierenden Element, die zum Bremsen des rotierenden Elementes eine Vorrichtung nach einem der Patentansprüche 1 bis 8 aufweist, wobei die Anordnung insbesondere ein Schienenfahrzeug ist und wobei das rotierende Element insbesondere eine rotierende Welle ist.

Außerdem bezieht sich die Erfindung auch auf ein Verfahren zum Bremsen eines rotierenden Elementes einer Anordnung, insbesondere zum Bremsen einer rotierenden Welle eines Schienenfahrzeugs, bei dem ein Rotor einer rotierenden Wirbelstrombremse drehfest mit dem rotierenden Element verbunden wird, bei dem ein Stator der rotierenden Wirbelstrombremse an der Anordnung abgestützt wird und bei dem im Bremsbetrieb zumindest eine Erregerspule des Stators von einer elektrischen Energiequelle gespeist wird, so dass ein inhomogenes Magnetfeld erzeugt wird, das im rotierenden Rotor Wirbelströme induziert, die ihrerseits ein dem inhomogenen Magnetfeld entgegen gesetztes Magnetfeld induzieren und damit eine den Rotor bremsende Kraft bewirken.

Um dabei eine Diagnose des Zustandes der rotierenden Wirbelstrombremse zu ermöglichen, werden erfindungsgemäß Mittel zur Wirbelstromprüfung der rotierenden Wirbelstrombremse bereitgestellt. Diese Mittel zur Wirbelstromprüfung weisen zumindest eine Prüfspule und eine mit der Prüfspule wirkverbundene elektrische Signalquelle sowie zumindest eine Messspule und einen mit der Messspule wirkverbundenen Signalempfänger auf, wobei die zumindest eine Prüfspule mittels der elektrischen Signalquelle mit einem Prüfsignal beaufschlagt wird, welches in dem Rotor Wirbelströme induziert, wobei der Signalempfänger von der zumindest einen Messspule ein von den induzierten Wirbelströmen bewirktes und damit zur Diagnose der Wirbelstrombremse geeignetes Messsignal abgreift, wobei die zumindest eine Erregerspule die zumindest eine Prüfspule bildet und wobei die zumindest eine Erregerspule und/oder eine weitere Erregerspule der Wirbelstrombremse die Messspule bildet.

Um beispielsweise auch im Bremsbetrieb eine Diagnose zu ermöglichen, wird es als vorteilhaft angesehen, wenn die elektrische Energiequelle der rotierenden Wirbelstrombremse auch als die elektrische Signalquelle der Mittel zur Wirbelstromprüfung eingesetzt und hierzu die zumindest eine Prüfspule bei der Diagnose mit dem als Prüfsignal dienenden Erregersignal der elektrischen Energiequelle beaufschlagt wird.

Die Erfindung wird im Weiteren anhand der Figuren 1 bis 16 näher erläutert. Dabei zeigen die
Figur 1 eine schematische Darstellung einer erfindungsgemäßen Anordnung in Form eines Schienenfahrzeugs mit rotierenden Elementen in Form von Wellen, die Radachsen bilden, und mit erfindungsgemäßen Vorrichtungen zum Bremsen der rotierenden Elemente, wobei jede dieser Vorrichtungen jeweils neben einer rotierenden Wirbelstrombremse auch Mittel zur Wirbelstromprüfung der rotierenden Wirbelstrombremse aufweist, die
Figuren 2 bis 5 vier Ausführungsformen der rotierenden Wirbelstrombremse, die
Figuren 6 bis 8 drei Ausführungsbeispiele der erfindungsgemäßen Vorrichtung zum Bremsen des rotierenden Elementes, bei denen bei der Diagnose eine oder mehrere Erregerspulen der rotierenden Wirbelstrombremse sowohl Prüfspulen als auch Messspulen der Mittel zur Wirbelstromprüfung bilden,
Figuren 9 bis 12 vier weitere Ausführungsbeispiele der erfindungsgemäßen Vorrichtung, bei denen bei der Diagnose eine oder mehrere Erregerspulen der Wirbelstrombremse Prüfspulen der Mittel zur Wirbelstromprüfung bilden und bei denen bei der Diagnose eine oder mehrere weitere Erregerspulen der Wirbelstrombremse Messspulen der Mittel zur Wirbelstromprüfung bilden,
Figur 13 ein weiteres Ausführungsbeispiel der erfindungsgemäßen Vorrichtung, bei dem bei der Diagnose zumindest zwei Erregerspulen der Wirbelstrombremse und zwei Widerstände zu einer Vollbrücke zusammen geschaltet sind,
Figur 14 das vereinfachte Ersatzschaltbild zu dem in Figur 13 gezeigten Ausführungsbeispiel,
Figur 15 ein weiteres Ausführungsbeispiel der erfindungsgemäßen Vorrichtung, bei dem bei der Diagnose Erregerspulen der Wirbelstrombremse zu einer Vollbrücke zusammen geschaltet sind und
Figur 16 das vereinfachte Ersatzschaltbild zu dem in Figur 15 gezeigten Ausführungsbeispiel.

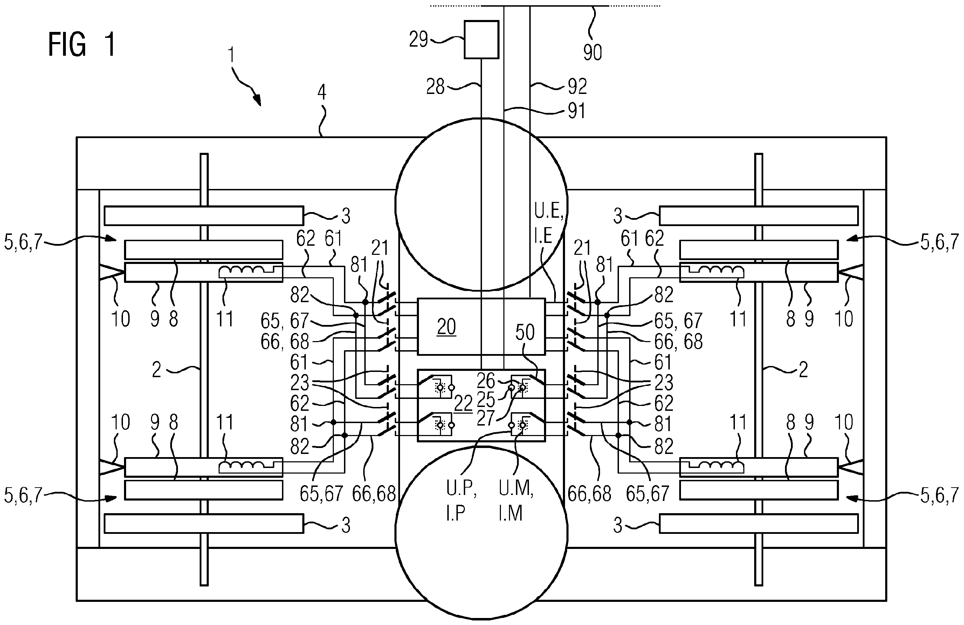

Die Figur 1 zeigt eine erfindungsgemäße Anordnung 1 in Form eines Schienenfahrzeugs mit zwei rotierenden Elementen 2 in Form von Wellen, die Radachsen bilden, an denen jeweils zwei Räder 3 befestigt sind und die über hier nicht gezeigte Radlager drehbar an einem Drehgestell 4 des Schienenfahrzeugs gehalten sind. Die erfindungsgemäße Anordnung 1 weist außerdem Vorrichtungen 5 zum Bremsen der rotierenden Elemente 2 auf.

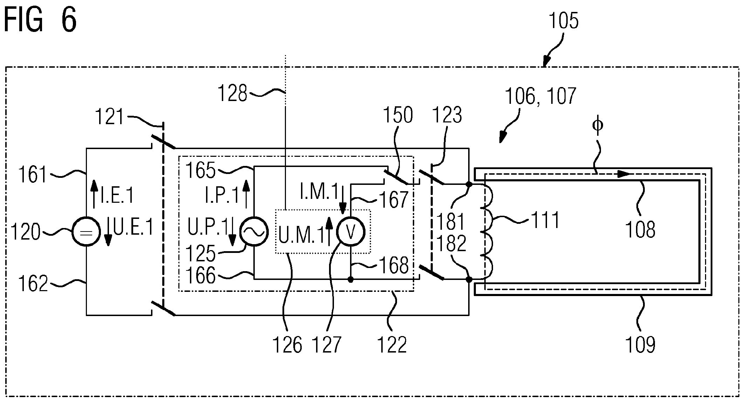

Die Figuren 6 bis 16 zeigen Ausführungsbeispiele 105; 205; ...; 905 der Vorrichtung 5.

Die Vorrichtungen 5; 105; ...; 905 umfassen jeweils neben einer rotierenden Wirbelstrombremse 6; 106; ...; 906 auch Mittel 7; 107; ...; 907 zur Wirbelstromprüfung der rotierenden Wirbelstrombremse 6; 106; ...; 906.

Die in den Figuren 1 und 2 sowie 6 bis 16 gezeigten Ausführungsformen 6; 106; ...; 906 der rotierenden Wirbelstrombremse weisen jeweils einen drehfest mit einem der rotierenden Elemente 2 verbundenen Rotor 8; 108; ...; 908 und einen Stator 9; 109; ...; 909 auf, wobei die Statoren 9; 109; ...; 909 über hier nur in der Figur 1 gezeigte Drehmomentstützen 10 am Drehgestell 4 abgestützt sind.

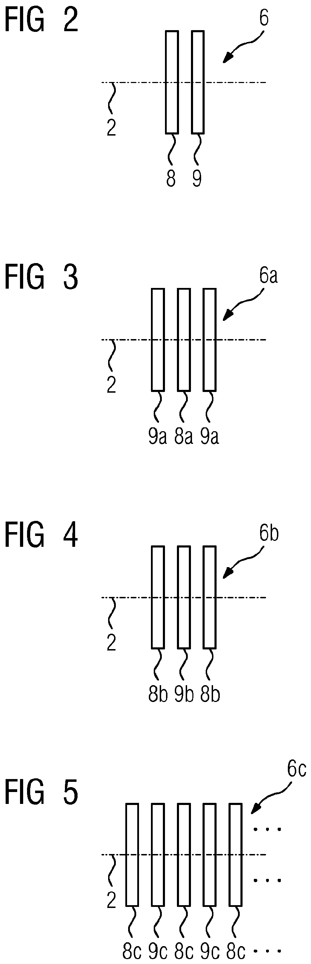

Die rotierenden Wirbelstrombremsen können jedoch anstelle nur eines Rotors auch mehrere Rotoren und/oder anstelle nur eines Stators auch mehrere Statoren aufweisen. So zeigen die Figuren 3, 4 und 5 weitere Ausführungsformen 6a, 6b und 6c der bei der erfindungsgemäßen Vorrichtung einsetzbaren rotierenden Wirbelstrombremse. Die in der Figur 3 gezeigte Ausführungsform 6a der rotierenden Wirbelstrombremse weist zwei äußere Statoren 9a (zwei äußere Statorpackete) auf, zwischen denen ein Rotor 8a (eine als Bremsscheibe dienende Rotorscheibe) angeordnet ist. Alternativ hierzu weist die in der Figur 4 gezeigte Ausführungsform 6b der rotierenden Wirbelstrombremse zwei äußeren Rotoren 8b auf, zwischen denen ein Stator 9b angeordnet ist. Ferner weist die in der Figur 5 gezeigte Ausführungsform 6c der rotierenden Wirbelströmbremse mehrere Rotoren 8c und mehreren Statoren 9c auf, wobei die Rotoren 8c und die Statoren 9c alternierend nebeneinander angeordnet sind. Die Ausgestaltung der rotierenden Wirbelstrombremse ist aber nicht auf die dargestellten Ausführungsformen 6; 106; ...; 906; 6a; 6b; 6c beschränkt. Vielmehr sind weitere beliebige Kombinationen von Statoren und Rotoren denkbar.

Gemäß den Figuren 1 sowie 6 bis 16 sind die Statoren 9; 109; ...; 909 jeder der rotierenden Wirbelstrombremsen 6; 106; ...; 906 jeweils mit zumindest einer Erregerspule 11; 111; 211 bis 218; 311 bis 318; 411, 412; 511 bis 518; 611, 612, 613, 614; 711 bis 718; 811 bis 818; 911 bis 918 zum Erzeugen eines räumlich inhomogenen Magnetfeldes versehen. Die zumindest eine Erregerspule ist von einer elektrischen Energiequelle 20; 120; ...; 920 gespeist. Das im Bremsbetrieb - also bei Erregung der Erregerspulen mittels der elektrischen Energiequelle - erzeugte räumlich inhomogene Magnetfeld induziert im zugeordneten rotierenden Rotor 8; 108; ...; 908 Wirbelströme, die ihrerseits ein dem inhomogenen Magnetfeld entgegen gesetztes Magnetfeld induzieren und damit eine den Rotor bremsende Kraft bewirken.

Anschlüsse (Anzapfungen) 81; 181; ...; 981 sowie 483; 683; 783 und 82; 182; ...; 982 sowie 484; 684; 784 der Erregerspulen der Statoren sind über Verbindungen 61; 161; ...; 961 sowie 463; 663; 763 und 62; 162; ...; 962 sowie 764 an die als Gleichspannungsquelle ausgebildete elektrische Energiequelle 20; 120; ...; 920 angeschlossen. Im Zuge der Verbindungen 61; 161; ...; 961 sowie 763 und 62; 162; ...; 962 sowie 764 sind erste Schalter 21; 121; ...; 921 angeordnet.

Bei den Ausführungsformen 505; 805 und 905 der erfindungsgemäßen Vorrichtung sind zwischen den Erregerspulen 514 und 515; 814 und 815,; 914 und 915 sowie 912 und 913, 916 und 917 weitere Anschlüssen (Anzapfungen) 585; 885; 985 sowie 986, 987 ausgebildet.

Die Mittel 7; 107; ...; 907 zur Wirbelstromprüfung weisen eine Diagnoseeinheit 22; 122; ...; 922 auf.

Zur Steuerung und Überwachung aller rotierenden Bremsen des Schienenfahrzeugs ist die Diagnoseeinheit 22; 122; ...; 922 mittels einer Verbindung 28; 128; ...; 928 mit einem hier nur in der Figur 1 gezeigten zentralen Steuer- und Überwachungsgerät 29 des Schienenfahrzeugs verbunden. Die Verbindung 28; 128; ...; 928 ist beispielsweise Teil eines Datenbussystems. - Außerdem sind die Energiequelle 20; 120; ...; 920 und die Diagnoseeinheit 22; 122; ...; 922 über hier nur in der Figur 1 gezeigte Verbindungen 91, 92 an eine zentrale Energieversorgung 90 des Schienenfahrzeugs angeschlossen.

Die Diagnoseeinheit 22; 122; ...; 922 ist mit einer elektrischen Signalquelle 25; 125; ...; 925 und einer Auswerteeinheit 26; 126; ...; 926 versehen, wobei die Auswerteeinheit 26; 126; ...; 926 einen Signalempfänger 27; 127; ...; 927 aufweist.

Die elektrische Energiequelle 20; 120; 220; ...; 920 liefert zwischen ihren Anschlusspunkten ein Erregersignal in Form einer Erregerspannung U.E; U.E.1; U.E.2; ...; U.E.9 die im Bremsbetrieb zwischen den hier mit 81; 181; ...; 981 sowie 683; 783 und 82; 182; ...; 982 sowie 684; 784 bezeichneten Anschlüssen (Anzapfungen) der zumindest einen Erregerspule der Wirbelstrombremse anliegt, so dass ein Erregerstrom I.E; I.E.1; I.E.2; ...; I.E.9 durch die zumindest eine Erregerspule fließt.

Die elektrische Signalquelle ist beispielsweise eine Wechselspannungsquelle 25; 125; 425; 625 oder eine Pulsweitenmodulierte Spannungsquelle (kurz PWM-Spannungsquelle) 225; 325; 525; 725; 825; 925, deren Prüfsignal in Form einer zeitlich inhomogenen Prüfspannung U.P; U.P.1; U.P.2; ...; U.P.9 bei der Diagnose über Verbindungen 65; 165; ...; 765; 865a sowie 865b; 965a sowie 965b und 66; 166; ...; 466; 566; 666; 766; 866; 966 zwischen den Anschlüssen 81; 181; ...; 881 sowie 882: 981 sowie 982 und 82; 182; ...; 482; 585; 682; 782; 885; 985 anliegt, so dass ein Prüfstrom I.P; I.P.1; I.P.2; ...; I.P.9 durch zumindest eine bzw. einige der Erregerspulen fließt. Die Erregerspulen, durch die der Prüfstrom I.P; I.P.1; I.P.2; ...; I.P.9 fließt, bilden bei der Wirbelstromprüfung der rotierenden Wirbelstrombremse Prüfspulen.

Der Signalempfänger 27; 127; ...; 927 ist über Verbindungen 67; 167; ...; 967 und 68; 168; 268; 368; 468; 568; 668; 768; 868; 968 mit den Anschlüssen 81; 181; 281; 381; 483; 585; 683; 783; 881; 986 und 82; 182; 282; 382; 484; 582; 684; 784; 882; 987 verbunden und misst ein zur Diagnose der Wirbelstrombremse geeignetes Messsignal in Form einer Messspannung U.M.1; U.M.2; ...; U.M.9, die aus einem in zumindest einigen der Erregerspulen induzierten Messstrom I.M.1; I.M.2; ...; I.M.9 resultiert. Die Erregerspulen, die durch Induktion an der Bildung des Messstroms I.M; I.M.1; I.M.2; ...; I.M.9 beteiligt sind und in Wirkverbindung mit dem Signalempfänger stehen, bilden bei der Wirbelstromprüfung der rotierenden Wirbelstrombremse Messspulen.

Während hier also die elektrische Signalquelle 25; 125; 225; ...; 925 separat zu der elektrischen Energiequelle 20; 120; ...; 920 der Wirbelstrombremse ausgebildet ist, kann in alternativer Ausgestaltung auch vorgesehen sein, dass die elektrische Energiequelle der Wirbelstrombremse bei der Diagnose zugleich die elektrische Signalquelle der Mittel zur Wirbelstromprüfung der Wirbelstrombremse bildet. Alternativ kann also die im Bremsbetrieb zur Versorgung der Erregerspule dienende Gleichspannungsquelle auch bei der Diagnose verwendet werden.

Gemäß den Figuren 1 und 6 ist bei den Ausführungsbeispielen 5 und 105 der erfindungsgemäßen Vorrichtung ein Umschalter 50; 150 vorgesehen, mittels dessen während zumindest einer ersten Diagnosephase die elektrische Signalquelle 25; 125 und während zumindest einer zweiten Diagnosephase der Signalempfänger 27; 127 an der hier einzigen Erregerspule 11; 111 angeschlossen - also mit den Anschlüssen 81, 82; 181, 182 elektrisch verbunden sind. In der hier gezeigten ersten Schaltstellung des Umschalters 50; 150 ist die Erregerspule 11; 111 mit der elektrischen Signalquelle 25; 125 verbunden und dient als Prüfspule. In einer zweiten Schaltstellung des Umschalters 50; 150 ist die Erregerspule 11; 111 mit dem Signalempfänger 27; 127 verbunden und dient als Messspule.

In der ersten Schaltstellung - also während der ersten Diagnosephase - werden aufgrund der sich zeitlich ändernden Prüfspannung U.P.1, die zwischen dem ersten 181 und dem zweiten 182 Anschluss anliegt, und aufgrund des damit einhergehenden Prüfstroms I.P.1, der durch die Erregerspule 111 fließt, ein sich zeitlich änderndes Magnetfeld erzeugt, das in dem Rotor Wirbelströme induziert. Die induzierten Wirbelströme bewirken ein dem zeitlich inhomogenen Magnetfeld entgegen gesetztes Magnetfeld, so dass in der zweiten Schaltstellung des Umschalters 150 - also während der zweiten Diagnosephase - durch die Erregerspule 111 der Messstrom I.M.1 fließt und an den Anschlüssen 181 und 182 die Messspannung U.M.1 anliegt.

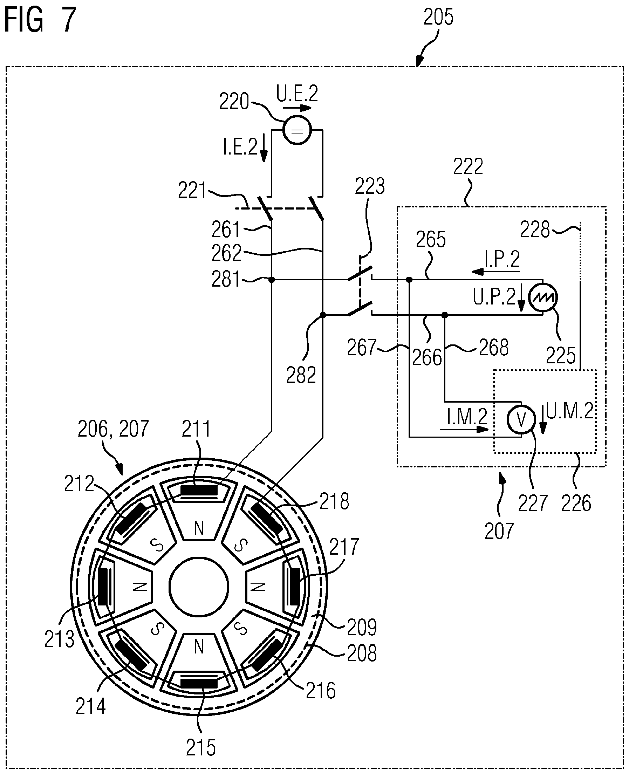

Bei dem in der Figur 7 gezeigten zweiten Ausführungsbeispiel 205 der erfindungsgemäßen Vorrichtung zum Bremsen des rotierenden Elementes weist der Stator 209 acht in Reihe geschaltete Erregerspulen 211, 212, ..., 218 auf, die derart gewickelt sind, dass sie bei ihrer Erregung - also beim Durchfluss des Erregerstromes I.E.2 auf der dem Rotor 208 zugewandten Seite abwechselnd Nord- und Südpole und damit ein räumlich inhomogenes Magnetfeld bilden.

Die Erregerspannung U.E.2 der elektrischen Energiequelle 220 liegt im Bremsbetrieb zwischen dem der ersten Erregerspule vorgeordneten ersten Anschluss 281 und dem der achten Erregerspule nachgeordneten zweiten Anschluss 282 an. Dabei ist die Gleichspannungsquelle 220 über den ersten Schalter 221 zu- bzw. abschaltbar.

Die elektrische Signalquelle 225 der Diagnoseeinheit 222 ist parallel zu der elektrischen Energiequelle 220 geschaltet und über den zweiten Schalter 223 zu- bzw. abschaltbar.

Der Signalempfänger 227 der Auswerteeinheit 226 ist parallel zu der elektrischen Signalquelle 225 geschaltet.

Bei dem zweiten Ausführungsbeispiel 205 ist das Prüfsignal U-P.2 ein Pulsweitenmodulations-Signal (kurz PWM-Signal). Während der Pulsweiten - also während erster Diagnosephasen - wird aufgrund der sich zeitlich ändernden Prüfspannung U.P.2, die zwischen dem ersten 281 und dem zweiten 282 Anschluss anliegt, und aufgrund des damit einhergehenden Prüfstroms I.P.2, der durch die Erregerspulen 211, 212, ..., 218 fließt, ein sich zeitlich änderndes Magnetfeld erzeugt, das in dem Rotor Wirbelströme induziert. Die Erregerspulen 211, 212, ..., 218 bilden damit in den ersten Diagnosephasen die Prüfspulen. Die induzierten Wirbelströme bewirken wiederum ein dem zeitlich inhomogenen Magnetfeld entgegen gesetztes Magnetfeld, so dass in den sich an die Pulsweiten anschließenden Pausen - also während zweiter Diagnosephasen - durch die Erregerspulen 211, 212, ..., 218 der Messstrom I.M.2 fließt und an den Anschlüssen 281 und 282 die Messspannung U.M.2 anliegt. Die Erregerspulen 211, 212, ..., 218 bilden damit in den zweiten Diagnosephasen die Messpulen.

Die Messspannung U.M.2 ist das zur Diagnose der Wirbelstrombremse geeignete Messsignal, das der Signalempfänger 227 abgreift.

Aus der Figur 7 ist erkennbar, dass auf die separate elektrische Signalquelle 225 verzichtet werden kann, wenn die Erregerspannung U.E.2 der elektrischen Energiequelle 220 selbst beispielsweise ein Pulsweitenmodulations-Signal (kurz PWM-Signal) ist, so dass die elektrische Energiequelle 220 zugleich als elektrische Signalquelle bei der Diagnose dienen kann. In diesem Fall könnte also die Erregerspannung U.E.2 der elektrischen Energiequelle 220 zugleich die Prüfspannung bei der Diagnose bilden, so dass neben der elektrischen Energiequelle 220 keine separat ausgebildete elektrische Signalquelle angeschlossen wäre. Dann könnte in besonders vorteilhafter Weise auch im Bremsbetrieb - also während einer Bremsung - in den sich an die Pulsweiten anschließenden Pausen - also während zweiter Diagnosephasen - eine an den Anschlüssen 281 und 282 abgreifbare Messspannung zur Diagnose der Wirbelstrombremse herangezogen werden.

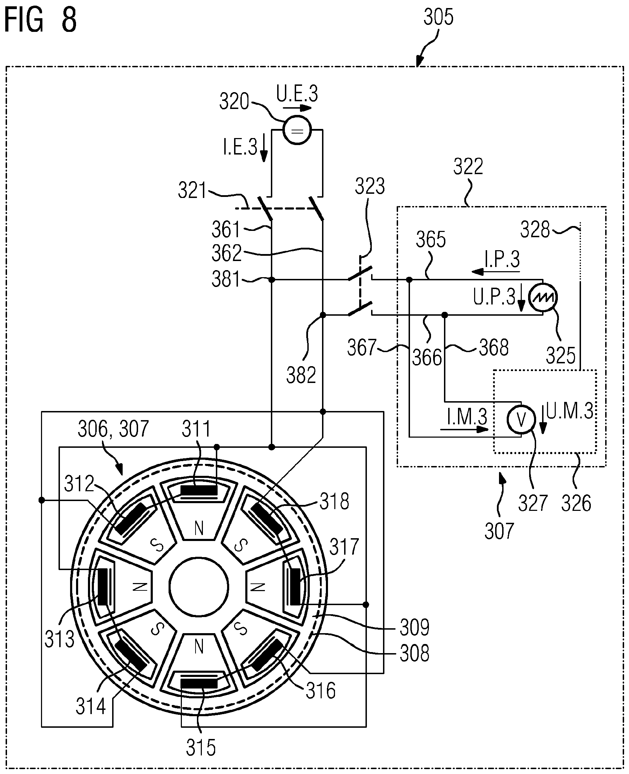

Im Unterschied zum zweiten Ausführungsbeispiel 205 sind bei dem in der Figur 8 dargestellten dritten Ausführungsbeispiel 305 der erfindungsgemäßen Vorrichtung jeweils zwei benachbarte der acht Erregerspulen 311, 312, ..., 318 als Paar in Reihe geschaltet und die vier Paare parallel geschaltet. In ihrem übrigen Aufbau entspricht dieses dritte Ausführungsbeispiel 305 dem in der Figur 7 gezeigten zweiten Ausführungsbeispiel 205.

Insbesondere kann auch hier auf die separate elektrische Signalquelle 325 verzichtet werden, wenn die Erregerspannung U.E.3 der elektrischen Energiequelle 320 selbst beispielsweise ein Pulsweitenmodulations-Signal (kurz PWM-Signal) ist, so dass die elektrische Energiequelle 320 zugleich als elektrische Signalquelle bei der Diagnose dienen kann. In diesem Fall könnte also wieder die Erregerspannung U.E.3 der elektrischen Energiequelle 320 zugleich die Prüfspannung bei der Diagnose bilden, so dass neben der elektrischen Energiequelle 320 keine separat ausgebildete elektrische Signalquelle angeschlossen wäre. Dann könnte wieder in besonders vorteilhafter Weise auch im Bremsbetrieb eine an den Anschlüssen 381 und 382 abgreifbare Messspannung zur Diagnose der Wirbelstrombremse herangezogen werden.

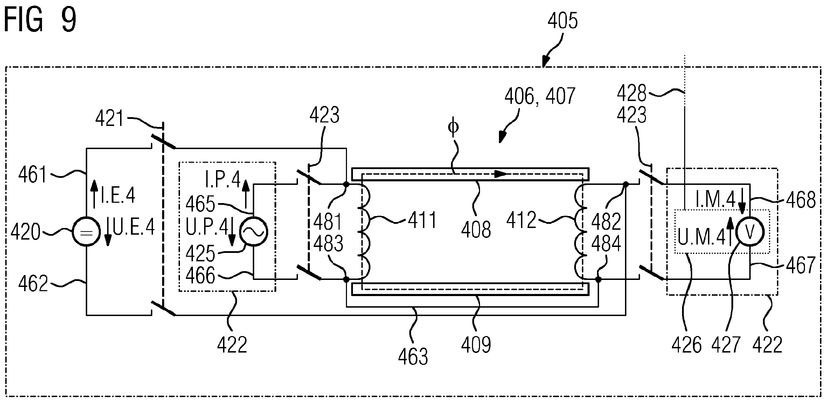

Wie oben bereits beschrieben, zeigen die Figuren 9 bis 12 weitere vier Ausführungsbeispiele der erfindungsgemäßen Vorrichtung, bei denen bei der Diagnose eine oder mehrere der Erregerspulen der Wirbelstrombremse Prüfspulen der Mittel zur Wirbelstromprüfung bilden und bei denen bei der Diagnose eine oder mehrere weitere der Erregerspulen der Wirbelstrombremse Messspulen der Mittel zur Wirbelstromprüfung bilden.

Bei dem in der Figur 9 gezeigten vierten Ausführungsbeispiel 405 der erfindungsgemäßen Vorrichtung ist der Stator 409 im Unterschied zu dem ersten Ausführungsbeispiel 105 zusätzlich zu der einen Erregerspule 411 mit einer weiteren Erregerspule 412 versehen, die im Bremsbetrieb über die Verbindung 463 in Reihe geschaltet sind und an denen im Bremsbetrieb die Erregerspannung U.E.4 der elektrischen Energiequelle 420 anliegt. Bei der Diagnose ist zum Einen die eine Erregerspule 411 mit der elektrischen Signalquelle verbunden. Zum Anderen ist die weitere Erregerspule 412 mit dem Signalempfänger 427 der Auswerteeinheit 426 elektrisch verbunden.

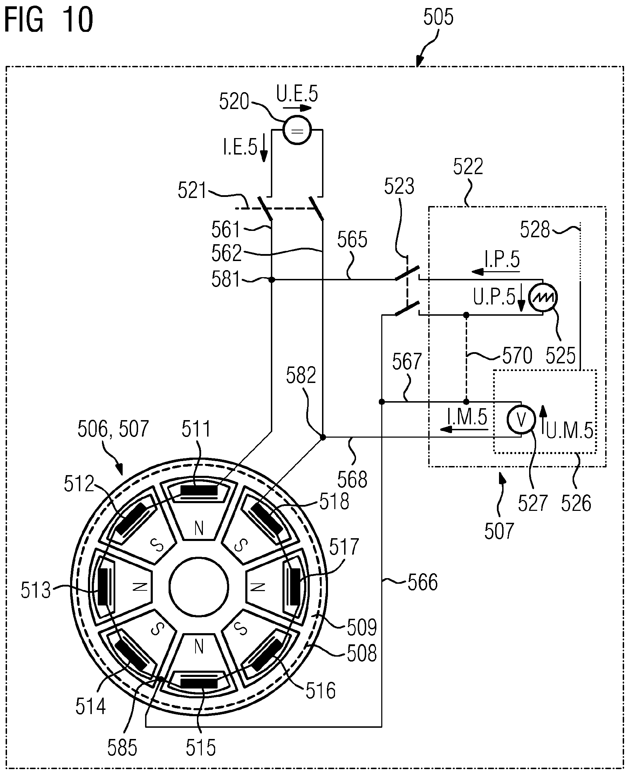

Das in der Figur 10 gezeigte fünfte Ausführungsbeispiel 505 entspricht zu großen Teilen dem zweiten Ausführungsbeispiel 205, wobei jedoch zwischen einer vierten 514 und einer fünften 515 der acht Erregerspulen zusätzlich der Anschluss 585 als dritter Anschluss (als eine dritte Anzapfung) vorgesehen ist. Dabei ist die elektrische Signalquelle 525 mit dem ersten 581 und dem dritten Anschluss 585 elektrisch verbunden. Der Signalempfänger 527 der Auswerteeinheit 526 hingegen ist mit dem zweiten 582 und dem dritten 585 Anschluss elektrisch verbunden. Dabei kann anstelle der hier mit 567 bezeichnete Verbindung mit dem dritten Anschluss 585 auch die hier mit gestrichelter Linie gezeigte und mit 570 bezeichnete Verbindung mit dem dritten Anschluss 585 vorgesehen sein, im Zuge derer der zweite Schalter 523 angeordnet ist. Außerdem kann der dritte Anschluss auch an beliebiger anderer Stelle zwischen dem ersten Anschluss 581 und dem zweiten Anschluss 582 angebracht werden. Der dritte Anschluss muss also nicht zwingend zwischen der vierten 514 und der fünften 515 Erregerspule - also nicht zwingend mittig - ausgebildet sein.

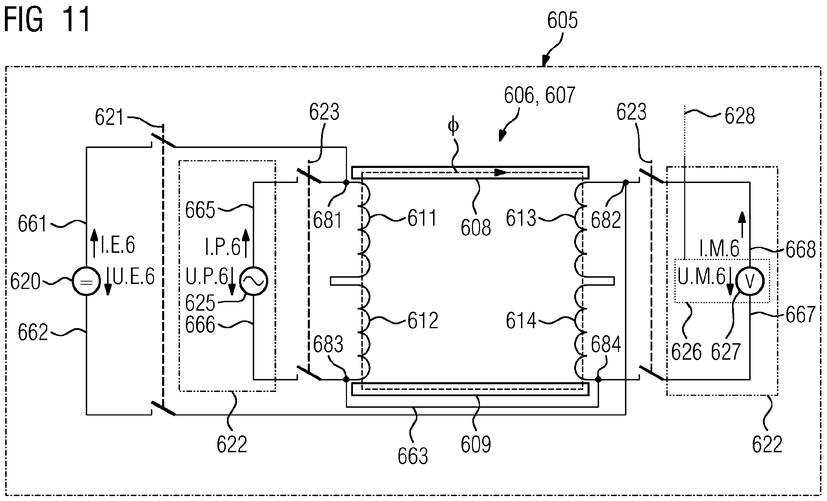

Das in der Figur 11 gezeigte sechste Ausführungsbeispiel 605 entspricht zu großen Teilen dem vierten Ausführungsbeispiel 405, wobei jedoch anstelle der einen Erregerspule zwei in Reihe geschaltete Erregerspulen 611, 612 mit der Signalquelle 625 und anstelle der einen weiteren Erregerspule zwei in Reihe geschaltete weitere Erregerspulen 613, 614 mit dem Signalempfänger 627 elektrisch verbunden sind. Im Bremsbetrieb sind die beiden Paare 611, 612 und 613, 614 der Erregerspulen über eine Verbindung 663 in Reihe geschaltet sind.

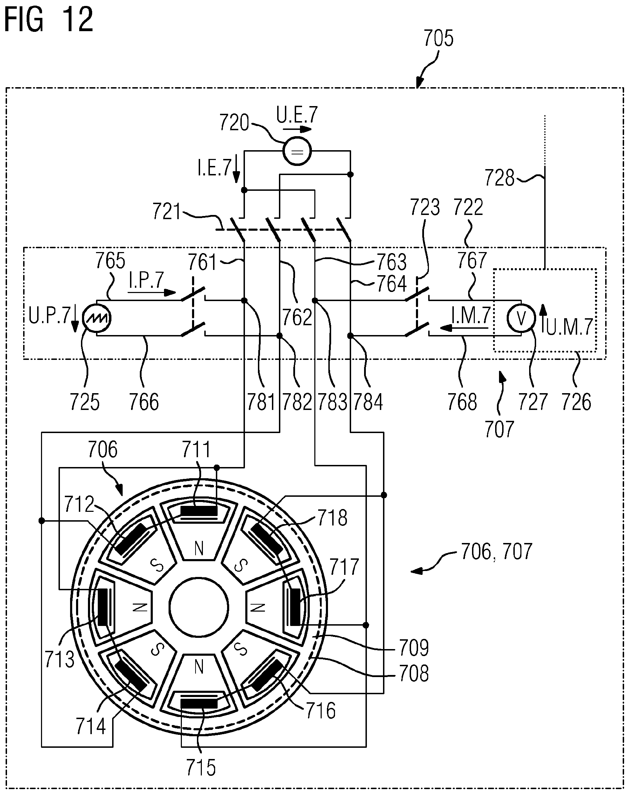

Das in der Figur 12 gezeigte siebente Ausführungsbeispiel 705 entspricht zu großen Teilen dem vierten Ausführungsbeispiel 405 , wobei jedoch bei der Diagnose zwei der Paare 711, 712 und 713, 714 der Erregerspulen mit der elektrischen Signalquelle 725 und zwei weitere der Paare 715, 716 und 717, 718 der Erregerspulen mit dem Signalempfänger 727 der Auswerteeinheit 726 elektrisch verbunden sind.

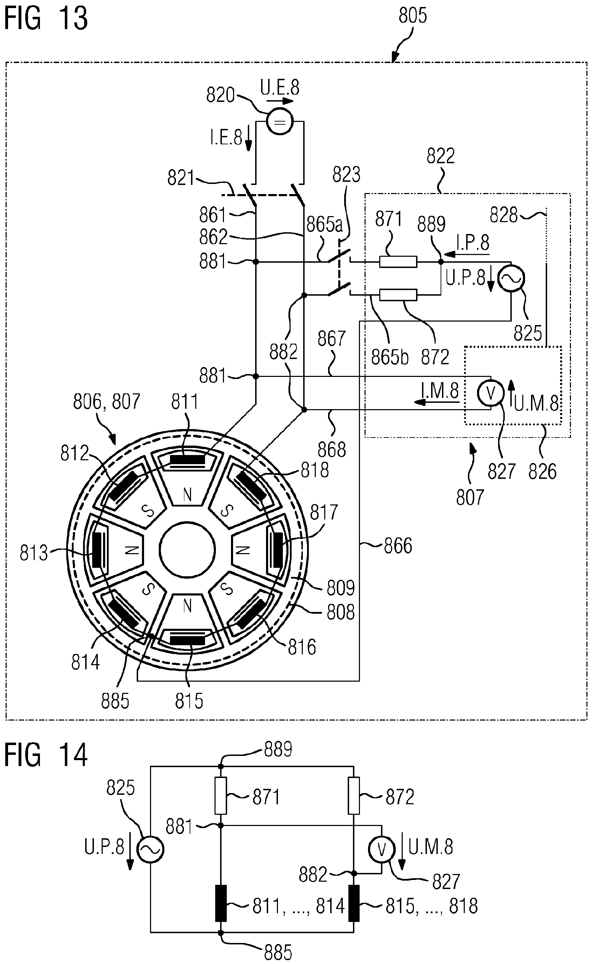

Bei dem in den Figuren 13 und 14 gezeigten achten Ausführungsbeispiel 805 bilden die Erregerspulen 811 bis 818 bei der Diagnose die Prüfspulen und die Messspulen. Dabei sind zwei Widerstände 871, 872 und die Erregerspulen 811 bis 814, 815 bis 818 zu einer Vollbrücke zusammengeschaltet. Der Signalempfänger 827 greift über die Anschlüsse 881 und 882 von der Vollbrücke das Messsignal U.M.8 in Form eines Differenzsignals ab.

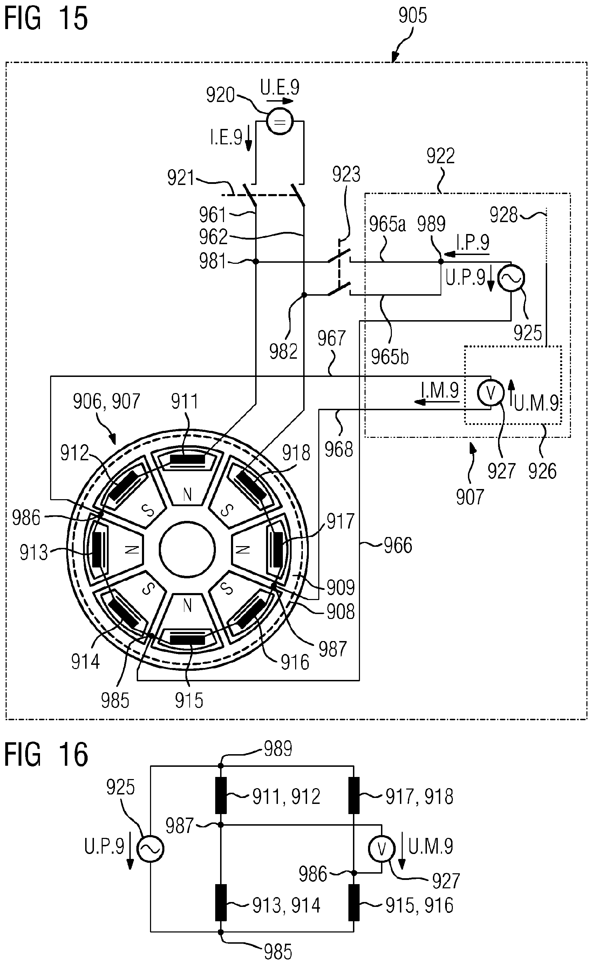

Im Unterschied hierzu sind bei dem in den Figuren 15 und 16 gezeigten neunten Ausführungsbeispiel 905 die Erregerspulen 911 bis 918 zu einer Vollbrücke zusammengeschaltet. Auch hier greift der Signalempfänger 927 über die Anschlüsse 986 und 987 von der Vollbrücke das Messsignal U.M.9 in Form eines Differenzsignals ab.

Im Folgenden sind die wesentlichen Merkmale und Vorteile der erfindungsgemäßen Vorrichtung, der erfindungsgemäßen Anordnung und des erfindungsgemäßen Verfahrens noch einmal zusammen gefasst:
I.) Die erfindungsgemäße Vorrichtung, die erfindungsgemäße Anordnung und das erfindungsgemäße Verfahren basieren auf der Anwendung der als Wirbelstromprüfung bekannten induktiven Messmethode. Dadurch wird eine zerstörungsfreie, berührungslose und echtzeitfähige Diagnose ermöglicht. Die zur Diagnose notwendige Energie wird also berührungslos, auf elektromagnetischem Weg zum Prüfling (hier der Rotor) übertragen.
   Eine Änderung der Wirbelströme, beispielsweise verursacht durch eine Verformung, durch eine Luftspaltveränderung oder durch einen Riss im Rotor, wirken sich in einer Änderung der Impedanz der Spule aus. Befindet sich z.B. ein Riss im Bereich der Wirbelstrombahnen, so verlängern sich diese und verursachen eine lokale Schwächung der Wirbelströme. Das Erregerfeld an dieser Stelle wird dadurch weniger geschwächt, was zu einer Impedanzerhebung in der zugehörigen Erregerspule führt. Diese Veränderung wird durch die Auswerteeinheit messtechnisch erfasst und verarbeitet. Ähnlich wirken Veränderungen in der Leitfähigkeit, der Permeabilität und der mechanische Abmessungen auf die Einzelimpedanzen.
II.) Vorteilhaft ist der ganzheitliche Ansatz, denn der Einsatz der erfindungsgemäßen Vorrichtungen und des erfindungsgemäßen Verfahrens kann im Stillstand und im Betrieb, bei Leerlauf und bei Volllast erfolgen.
III.) Bei der erfindungsgemäßen Vorrichtung, der erfindungsgemäßen Anordnung und dem erfindungsgemäßen Verfahren kommen die sowieso vorhandenen Erregerspulen als Prüf- und/oder Messspulen zum Einsatz, so dass wesentliche Teile der Mittel zur Wirbelstromprüfung in der rotierenden Wirbelstrombremse inhärent und somit zusätzliche Spulen nicht erforderlich sind.
IV.) Bei der erfindungsgemäßen Vorrichtung, der erfindungsgemäßen Anordnung und dem erfindungsgemäßen Verfahren können eine einzige, ein Teil oder alle der Erregerspulen als Prüf- und/oder als Messspulen dienen. Als Prüf- und Messspulen können also dieselben oder separate Erregerspulen zum Einsatz kommen.
   Sollen die Prüfspulen separat zu den Messspulen ausgebildet sein, so ist zur entsprechenden Aufteilung der Erregerspulen zumindest ein zusätzlicher dritter Anschluss (ein Mittelabgriff) der rotierenden Wirbelstrombremse erforderlich.
   Sowohl bei einem zusätzlichen Anschluss als auch bei zwei zusätzlichen Anschlüssen (zwei Mittelabgriffen) der rotierenden Wirbelstrombremse - kann nur ein Teil der Erregerspulen zur Diagnose verwendet werden. Dadurch kann eine hohe Erregerspannung für die Diagnose geteilt werden, so dass eine geringere Spannungsfestigkeit der Auswerteelektronik erforderlich ist.
V.) Bei der Diagnose kann die Erregung der zumindest einen als Prüfspule dienenden Erregerspule mit einer Wechselspannung erfolgen.
VI.) Alternativ kann bei der Diagnose die Erregung der zumindest einen als Prüfspule dienenden Erregerspule mit einer Gleichspannung erfolgen. Bei der Erregung mit einer Gleichspannung kann durch einmaliges Einschalten der elektrischen Signalquelle ein einmaliger definierter Spannungsverlauf (zum Beispiel ein Impuls) oder durch mehrfaches Ein- und Ausschalten der elektrischen Signalquelle ein wiederkehrender Spannungsverlauf (zum Beispiel ein Pulsmuster) generiert und zur Diagnose verwendet werden.
VII.) Zur Diagnose kann die in der Messspule induzierte Spannung und deren Verlauf gemessen werden.
VIII.) Bei einem Pulsmuster der Prüfspannung (wenn also die Stromregelung der zumindest einen als Prüfspule dienenden Erregerspule durch Pulsweitenmodulation erfolgt) kann in den Schaltpausen die Messspannung erfasst werden. Somit kann kontinuierlich auch während des Fahrbetriebs die Wirbelstrombremse diagnostiziert werden. Dabei kann beispielsweise gemäß den Figuren 7 und 8 sogar eine Diagnose im Bremsbetrieb erfolgen, wenn die elektrische Energiequelle zugleich die elektrische Signalquelle bildet - wenn also keine separate elektrische Signalquelle angeschlossen ist.
IX.) Gemäß den Figuren 2 bis 5 kann bei der erfindungsgemäßen Vorrichtungen, der erfindungsgemäßen Anordnung und dem erfindungsgemäßen Verfahren jegliche Ausführungsform der rotierenden Wirbelstrombremse zum Einsatz kommen.
X.) Die Auswertung der Messsignale kann beispielsweise mittels Spektralanalyse, mittels Schneller FourierTransformation (kurz "FFT", mitels Fuzzy-Logik oder mittels neuronaler Netze erfolgen.
XI.) Bei der Auswertung kann neben einem Vergleich von charakteristischen Spannungen und/oder Strömen auch ein hier nicht gezeigter Vergleich charakteristischer Temperaturen erfolgen.
XII.) Für die Bereitstellung der Prüfspannung (des bzw. der Prüfsignale) gibt es zwei Möglichkeiten. Zum Einen kann die elektrische Energiequelle auch die elektrische Signalquelle bilden, also nicht nur für den Bremsbetrieb sondern auch für die Diagnose verwendet werden. In diesem Fall können während der Bremsphase Messsignale erfasst und ausgewertet werden. Außerdem kann in diesem Fall im Stillstand oder in der Leerlaufphase die elektrische Energiequelle für die Diagnose als elektrische Signalquelle kurzzeitig zugeschaltet werden. Zum Anderen kann die elektrische Energiequelle separat zur elektrischen Signalquelle ausgebildet sein. In diesem Fall kann im Stillstand oder in der Leerlaufphase das Prüfsignal der elektrischen Signalquelle für die Diagnose zugeschaltet werden.

Die erfindungsgemäße Vorrichtung, die erfindungsgemäße Anordnung und das erfindungsgemäße Verfahren ermöglichen die Einhaltung der Anforderungen an die Bremsprobe eines Bremssystems für Fahrzeuge, im Wesentlichen Schienenfahrzeuge, mit rotierenden Wirbelstrombremsen.

Die erfindungsgemäße Vorrichtung, die erfindungsgemäße Anordnung und das erfindungsgemäße Verfahren ermöglichen eine ganzheitliche Diagnose eines als rotierende Wirbelstrombremse (kurz RWB) ausgebildeten Aktors eines Bremssystems.

Insbesondere ermöglichen die erfindungsgemäße Vorrichtung, die erfindungsgemäße Anordnung und das erfindungsgemäße Verfahren sowohl eine Diagnose der rotierenden Wirbelstrombremse im Stillstand oder während der Fahrt im Leerlauf als auch eine Diagnose der rotierenden Wirbelstrombremse während der Fahrt bei Bremsvorgängen.

Die Diagnose kann kontinuierlich erfolgen. Im Ergebnis der Diagnose erstellte Diagnosedaten können für eine spätere Weiterverarbeitung aufgezeichnet werden.

Die erfindungsgemäße Vorrichtung, die erfindungsgemäße Anordnung und das erfindungsgemäße Verfahren ermöglichen beispielsweise die Diagnose von Materialgefügeveränderungen in dem als Bremsscheibe dienenden Rotor, zum Beispiel in Form von Rissen oder Brüchen der Bremsscheibe. Das erfindungsgemäße Verfahren ermöglicht auch die Diagnose von Verformungen der Bremsscheibe.

Außerdem ermöglichen die erfindungsgemäße Vorrichtung, die erfindungsgemäße Anordnung und das erfindungsgemäße Verfahren die Diagnose von Luftspaltveränderungen zwischen dem zumindest einen Stator und dem zumindest einen Rotor (Bremsscheibe), wodurch beispielsweise eine Schieflage des Rotors diagnostiziert werden kann.

Ferner ermöglichen die erfindungsgemäße Vorrichtung, die erfindungsgemäße Anordnung und das erfindungsgemäße Verfahren eine Diagnose des Zustandes (z.B. des Widerstandes und alternativ auch noch der Temperatur) der Wicklungen der Erregerspulen.

Bei mehreren erfindungsgemäßen Vorrichtungen kann - beispielsweise online - ein übergeordneter Abgleich der Diagnosedaten ihrer rotierenden Wirbelstrombremsen - also ein Vergleich charakteristischer Parameter oder Merkmale der verschiedenen rotierenden Wirbelstrombremsen - erfolgen.

Außerdem können zeitliche Veränderungen (Langzeiteffekte) der rotierenden Wirbelstrombremse diagnostiziert werden.

Im Folgenden sind weitere wesentliche Vorteile der verschiedenen Ausführungsbeispiele der erfindungsgemäßen Vorrichtung und des erfindungsgemäßen Verfahrens noch einmal zusammen gefasst:
i.) Durch die induktive Messmethode in Form der Wirbelstromprüfung wird überhaupt erst eine Diagnose der rotierenden Wirbelstrombremse im Stillstand ermöglicht.
ii.) Alle Betriebsbedingungen werden erfasst und können ausgewertet werden.
iii.) Für die Diagnose werden nur bzw. fast nur vorhandene Komponenten des Bremssystems Wirbelstrombremse genutzt. Es werden keine bzw. nur wenige zusätzlichen Bauteile oder Komponenten für die Diagnose benötigt. Dadurch entstehen keine bzw. nur geringe zusätzlichen Kosten für die Diagnose der Wirbelstrombremse. Dies führt zu einer vorteilhaften Kosteneinsparung.
iv.) Bei nur einer vorhandenen Erregerspule wird diese bei der Diagnose als Prüfspule und anschließend als Messspule verwendet. Hier hat man im Prinzip eine einfache Erregerspule, um sowohl das zur Prüfung notwendige magnetische Feld zu erzeugen, als auch die induzierten Wirbelströme zu erfassen. Die Funktion der Wirbelstromprüfung wird durch eine Umschaltung zwischen elektrischer Signalquelle und Signalempfänger realisiert (vgl. Figur 6). Mit dieser Methode können Veränderungen, verglichen mit gespeicherten Referenzwerten erfasst werden. Dadurch kann auf Beschädigungen oder Veränderungen der rotierenden Wirbelstrombremse, insbesondere des Rotors - geschlossen werden. Auch der übergeordnete Abgleich mehrerer rotierender Wirbelstrombremsen - also ein Vergleich der Messsignale verschiedener rotierender Wirbelstrombremsen ist hier möglich.
v.) Bei zwei oder mehr Erregerspulen wird während der Diagnose mindestens eine Erregerspule als Prüfspule und mindestens eine weitere Erregerspule als Messspule geschaltet. Beliebige Kombinationen sind möglich und ergeben unterschiedliche Genauigkeiten bei der Diagnose der Wirbelstrombremse (vgl. die Figuren 9 bis 12).
vi.) Dabei kann durch die Erregung mit Wechselspannung die Wirbelstrombremse bei der Diagnose mit mehreren Spulen als Transformator betrachtet werden. Durch Einspeisen einer Wechselspannung in die Primarspule bzw. die Primärspulen wird ein Magnetfeld aufgebaut, so dass sich entlang des magnetischen Kreises über die Bremsscheibe und evtl. Rückschluss zur Messspule ein magnetischer Fluss Φ ausbildet. An der Messspule bzw. den Messspulen kann dann die induzierte Spannung gemessen werden. Je nach Zustand des Magnetkreises (Luftspalt zwischen Spule und Bremsscheibe, magnetische Leitfähigkeit der Bremsscheibe etc.) werden unterschiedliche Spannungen gemessen. Aus einer Änderung der gemessenen Spannung gegenüber einer Referenzmessung mit intakten Bauteilen kann auf einen Fehler in der Wirbelstrombremse geschlossen werden (vgl. beispielsweise die Figuren 9 und 11).
vii.) Wenn die elektrische Energiequelle eine Gleichspannungsquelle ist, wenn also für die Erregung der Wirbelstrombremse im Bremsbetrieb nur Gleichspannung zur Verfügung steht, dann muss für die Diagnose eine Wechselspannung separat bereitgestellt oder erzeugt werden. Mit einer Gleichspannung an der Erregerspule kann sonst im Bremsbetrieb keine kontinuierliche Messung durchgeführt werden. Beim Einschalten und Ausschalten der Gleichspannung der elektrischen Energiequelle wird jedoch wie bei einer Wechselspannung einmalig ein Magnetfeld auf- bzw. abgebaut. Diese einmalige Änderung des Magnetfeldes führt zu einer einmaligen Spannungsinduktion in der Messspule. Diese Spannung kann ebenfalls gemessen werden. Bei Verwendung von Pulsmustern anstelle eines einmaligen Schaltvorganges werden auch entsprechend des Pulsmusters Spannungen in der Messspule induziert, welche gemessen und ausgewertet werden können (vgl. beispielsweise die Figuren 10 und 12).
viii.) Die in der Messspule bzw. in den Messspulen induzierte Spannung soll nach dem Messen ausgewertet werden. Die gemessene Spannung wird hierzu mit einer Referenzmessung verglichen. Bei einer Abweichung muss sich etwas an der Erregerspannung in der Erregerspule, am magnetischen Kreis (Luftspalt, Bremsscheibe) oder an der Messspule verändert haben. Die Prüfspannung kann ebenfalls gemessen und dadurch als Fehlerquelle ausgeschlossen werden. Solange keine Überlastung der Spulen stattfindet, können sich die Eigenschaften der Spulen - also der Prüfspule(n) und der Messspule(n) - nicht verändern. Dies wird durch eine Stromregelung und eine Temperaturüberwachung während des Betriebs sichergestellt. Daher kommt eine Veränderung der gemessenen Spannung mit hoher Wahrscheinlichkeit aus einem Fehler im Magnetkreis. Dies können beispielsweise Risse oder Materialfehler im Rotor (in der Bremsscheibe) oder Veränderungen des Luftspaltes sein, die durch eine Beschädigung der Bremse durch Krafteinwirkung von Außen (z.B. Schotterflug) entstehen können.
   Die Referenzmessung kann zum Beispiel nach der Montage der Wirbelstrombremse am Fahrzeug mit der noch neuen, unbenutzten und unbeschädigten Bremse erfolgen.
ix.) Da im Prinzip alle Einzelspulen gleich sind, können durch Ausnutzung von Symmetrieeigenschaften, durch Berücksichtigung der abwechselnden Nord- und Südpole und durch intelligente Abgriffe der Spulenspannungen die Impedanzen und Impedanzänderungen leicht ermittelt werden, z.B. durch Differenzanordnungen.
x.) Bei einem zusätzlichen Abgriff, möglichst symmetrisch zwischen den Spulen ist beispielsweise der Aufbau einer Brückenschaltung möglich. Durch Differenzbildung kann die Veränderung der Impedanz in einer der Spulenhälften ermittelt werden. lm Gut-Zustand ist die Brücke abgeglichen und es sollte keine Differenzspannung messbar sein. Ändert sich z.B. durch einen Riss die Impedanz einer Spulenhälfte, dann ist die Brücke verstimmt. Dies kann messtechnisch leicht ermittelt werden. Diese Methode eignet sich z.B. gut um im Stillstand zu messen und Veränderungen im Stillstand festzustellen. Auch das transformatorische Prinzip kann man hier einsetzen: Einspeisung auf einer Spulenseite, Messung der induzierten Spannung auf der unbestromten Spulenseite(vgl. die Figuren 13 und 14).
xi.) Bei mehreren z.B. drei zusätzlichen Abgriffen zwischen den Spulen ist es möglich, eine Vollbrücke aufzubauen. Außerdem können hier über das transformatorische Prinzip Teilbereiche (zwischen zwei Spulenabgriffen) der Spulenanordnung vermessen werden. Auch hier sind durch die Differenzbildung hochempfindliche Messaufbauten möglich. (vgl. die Figuren 15 und 16).
xii.) Eine Beeinträchtigung des laufenden Betriebes ist nicht erforderlich.
xiii.) Die erfindungsgemäße Vorrichtung, die erfindungsgemäße Anordnung und das erfindungsgemäße Verfahren sind vom Aufbau der rotierenden Wirbelstrombremse unabhängig (vgl. Figuren 2 bis 5).
xiv.) Die erfindungsgemäße Vorrichtung, die erfindungsgemäße Anordnung und das erfindungsgemäße Verfahren sind von der Anzahl der Erregerspulen unabhängig. Die gezeigten Ausführungsbeispiele haben nur beispielhaft eine, zwei, vier bzw. acht Erregerspulen. Bei nur einer Erregerspule kann das zum Bremsbetrieb erforderliche räumlich inhomogene Magnetfeld beispielsweise durch verschachtelte Klauenpolringe realisiert werden (Klauenpolprinzip). Vorteilhaft ist eine gerade Anzahl Erregerspulen, wobei auch weit mehr als acht - beispielsweise vierundzwanzig - Erregerspulen zum Einsatz kommen können.
xv) Die erfindungsgemäße Vorrichtung, die erfindungsgemäße Anordnung und das erfindungsgemäße Verfahren sind von der Ausführung des Wicklungsdrahtes der Erregerspulen unabhängig.
xvi.) Die erfindungsgemäße Vorrichtung, die erfindungsgemäße Anordnung und das erfindungsgemäße Verfahren sind vom Aufbau der Erregerspulen unabhängig.
xvii) Eine automatisierte Erkennung von Fehlern ist möglich.
xviii) Durch Referenzwertmessung können Herstellungs- und Materialtoleranzen festgelegt und mit Messdaten weiterer Bremsen abgeglichen werden.

## Patentansprüche

1. Vorrichtung (5; 105; ...; 905) zum Bremsen eines rotierenden Elementes (2) einer Anordnung (1), insbesondere zum Bremsen einer rotierenden Welle eines Schienenfahrzeugs,
- mit einer rotierenden Wirbelstrombremse (6; 106; ...; 906; 6a; 6b; 6c), die einen drehfest mit dem rotierenden Element (2) verbindbaren Rotor (8; 108; ...; 908) und einen an der Anordnung abstützbaren Stator (9; 109; ...; 909) aufweist, wobei der Stator mit zumindest einer im Bremsbetrieb von einer elektrische Energiequelle (20; 120; ...; 920) gespeisten Erregerspule (11; 111; 211 bis 218; 311 bis 318; 411, 412; 511 bis 518; 611, 612, 613, 614; 711 bis 718; 811 bis 818; 911 bis 918) versehen ist,
**gekennzeichnet durch**
Mittel (7; 107; ...; 907) zur Wirbelstromprüfung der rotierenden Wirbelstrombremse, die zumindest eine Prüfspule und eine mit der zumindest einen Prüfspule wirkverbundene elektrische Signalquelle aufweisen, wobei die elektrische Signalquelle (125; 225; ...; 925) die Prüfspule bei einer Diagnose mit einem Prüfsignal (U.P; U.P.1; ...; U.P.9) beaufschlagt, welches in dem Rotor Wirbelströme induziert, und die zumindest eine Messspule und einen mit der zumindest einen Messspule wirkverbundenen Signalempfänger (127; 227; ...; 927) aufweisen, wobei der Signalempfänger bei der Diagnose von der zumindest einen Messspule ein von den induzierten Wirbelströmen bewirktes und damit zur Diagnose der Wirbelstrombremse geeignetes Messsignal (U.M; U.M.1; ...; U.M.9) abgreift,
- wobei die zumindest eine Erregerspule (11; 111; 211 bis 218; 311 bis 318; 411; 511 bis 514; 611, 612; 711 bis 714; 811 bis 818; 911 bis 918) die zumindest eine Prüfspule bildet und
- wobei die zumindest eine Erregerspule (11; 111; 211 bis 218; 311 bis 318; 811 bis 818; 911 bis 918) und/oder eine weitere Erregerspule (412; 515 bis 518; 613, 614; 715 bis 718) der Wirbelstrombremse die zumindest eine Messspule bildet.

2. Vorrichtung nach Anspruch 1
**dadurch gekennzeichnet, dass**
die elektrische Energiequelle der rotierenden Wirbelstrombremse die elektrische Signalquelle der Mittel zur Wirbelstromprüfung bildet.

3. Vorrichtung (5; 105; ...; 905) nach Anspruch 1,
**dadurch gekennzeichnet, dass**
die elektrische Energiequelle (20; 120; ...; 920) der rotierenden Wirbelstrombremse separat zur elektrischen Signalquelle (125; 225; ...; 925) der Mittel zur Wirbelstromprüfung ausgebildet ist.

4. Vorrichtung (5; 105; 205; 305) nach einem der Ansprüche 1 bis 3 ,
**dadurch gekennzeichnet,**
- **dass** die zumindest eine Erregerspule (11; 111; 211 bis 218; 311 bis 318) während zumindest einer ersten Diagnosephase die Prüfspule bildet, wobei der Signalempfänger (127; 227; 327) während der zumindest einen ersten Diagnosephasen das Prüfsignal der elektrische Signalquelle (125; 225; 325) erfasst und
- **dass** die zumindest eine Erregerspule (11; 111; 211 bis 218; 311 bis 318) während zumindest einer zweiten Diagnosephase, die zu der zumindest einen ersten Diagnosephasen zeitlich versetzt ist, die zumindest eine Messspule bildet, wobei der Signalempfänger (127; 227; 327) während der zumindest einen zweiten Diagnosephase das Messsignal erfasst.

5. Vorrichtung (105) nach Anspruch 4,
**gekennzeichnet durch**
einen Umschalter (150), mittels dessen während der zumindest einen ersten Diagnosephase die elektrischen Signalquelle (125) und während der zumindest einen zweiten Diagnosephase der Signalempfänger (127) an der zumindest einen Erregerspule (111) angeschlossen sind.

6. Vorrichtung (805) nach einem der Ansprüche 1 bis 3 d a durc h g e k e n n z e ichn e t, das s
die Erregerspulen (811 bis 818) bei der Diagnose die Prüfspulen und die Messspulen bilden, wobei zwei Widerstände (871, 872) und die Erregerspulen (811 bis 814, 815 bis 818) zu einer Vollbrücke zusammengeschaltet sind und wobei der Signalempfänger (827) von der Vollbrücke das Messsignal in Form eines Differenzsignals abgreift.

7. Vorrichtung (905) nach einem der Ansprüche 1 bis 3 **dadurch gekennzeichnet, dass**
die Erregerspulen (911 bis 918) bei der Diagnose die Prüfspulen und die Messspulen bilden, wobei die Erregerspulen (911 bis 918) zu einer Vollbrücke zusammengeschaltet sind und wobei der Signalempfänger (927) von der Vollbrücke das Messsignal in Form eines Differenzsignals abgreift.

8. Vorrichtung (5; 105; ...; 905) nach einem der Ansprüche 1 bis 7 **gekennzeichnet, durch**
eine Auswerteeinheit (22; 122; ...; 922), die zur Auswertung der Messsignale mit dem Signalempfänger (127; 227; ...; 927) wirkverbunden ist.

9. Anordnung (1), insbesondere Schienenfahrzeug, mit einem rotierenden Element (2), insbesondere einer rotierenden Welle, und mit einer Vorrichtung (5; 105; ...; 905) zum Bremsen des rotierenden Elementes, **dadurch gekennzeichnet, dass**
die Vorrichtung (5; 105; ...; 905) nach einem der Ansprüche 1 bis 8 ausgebildet ist.

10. Verfahren zum Bremsen eines rotierenden Elementes (2) einer Anordnung (1), insbesondere zum Bremsen einer rotierenden Welle eines Schienenfahrzeugs,
- bei dem ein Rotor (8; 108; ...; 908) einer rotierenden Wirbelstrombremse (6; 6a; 6b; 6c) drehfest mit dem rotierenden Element (2) verbunden wird,
- bei dem ein Stator (9; 109; ...; 909) der rotierenden Wirbelstrombremse an der Anordnung (1) abgestützt wird und
- bei dem im Bremsbetrieb zumindest eine Erregerspule (11; 111; 211 bis 218; 311 bis 318; 411, 412; 511 bis 518; 611, 612, 613, 614; 711 bis 718; 811 bis 818; 911 bis 918) des Stators von einer elektrischen Energiequelle (20; 120; ...; 920) gespeist wird,
**gekennzeichnet dadurch, dass**
- Mittel (7; 107; ...; 907) zur Wirbelstromprüfung der rotierenden Wirbelstrombremse bereitgestellt werden, die zumindest eine Prüfspule und eine mit der Prüfspule wirkverbundene elektrische Signalquelle (125; 225; ...; 925) sowie zumindest eine Messspule und einen mit der Messspule wirkverbundenen Signalempfänger (127; 227; ...; 927) aufweisen,
- wobei die zumindest eine Prüfspule mittels der elektrischen Signalquelle mit einem Prüfsignal (U.P; U.P.1; ...; U.P.9) beaufschlagt wird, welches in dem Rotor Wirbelströme induziert,
- wobei der Signalempfänger von der zumindest einen Messspule ein von den induzierten Wirbelströmen bewirktes und damit zur Diagnose der Wirbelstrombremse geeignetes Messsignal (U.M; U.M.1; ...; U.M.9) abgreift,
- wobei die zumindest eine Erregerspule (11; 111; 211 bis 218; 311 bis 318; 411; 511 bis 514; 611, 612; 711 bis 714; 811 bis 818; 911 bis 918) die zumindest eine Prüfspule bildet und
- wobei die zumindest eine Erregerspule (11; 111; 211 bis 218; 311 bis 318; 811 bis 818; 911 bis 918) und/oder eine weitere Erregerspule (412; 515 bis 518; 613, 614; 715 bis 718) der Wirbelstrombremse die Messspule bildet.

11. Verfahren nach Anspruch 10,
**gekennzeichnet dadurch, dass**
die elektrische Energiequelle (220; 320) der rotierenden Wirbelstrombremse auch als die elektrische Signalquelle der Mittel zur Wirbelstromprüfung eingesetzt und hierzu die zumindest eine Prüfspule (211 bis 218; 312 bis 318) bei der Diagnose mit dem als Prüfsignal dienenden Erregersignal der elektrischen Energiequelle (220; 320) beaufschlagt wird.

## Claims

1. Apparatus (5; 105; ...; 905) for braking a rotating element (2) of an assembly (1), in particular for braking a rotating shaft of a rail vehicle,
- with a rotating eddy current brake (6; 106; ...; 906; 6a; 6b; 6c), which has a rotor (8; 108; ...; 908) which can be connected to the rotating element (2) in a non-rotating manner and a stator (9; 109; ...; 909) which can be braced against the assembly, wherein the stator is provided with at least one excitation coil (11; 111; 211 to 218; 311 to 318; 411, 412; 511 to 518; 611, 612, 613, 614; 711 to 718; 811 to 818; 911 to 918) supplied by an electrical energy source (20; 120; ...; 920) during braking operation,
**characterised by**
means (7; 107; ...; 907) for eddy current testing of the rotating eddy current brake, which have at least one testing coil and one electrical signal source actively connected to the at least one testing coil, wherein the electrical signal source (125; 225; ...; 925) applies a testing signal (U.P; U.P.1; ...; U.P.9) to the testing coil during a diagnosis, which testing signal induces eddy currents in the rotor, and which have at least one measuring coil and one signal receiver (127; 227; ...; 927) actively connected to the at least one measuring coil, wherein during the diagnosis the signal receiver taps a measuring signal (U.M; U.M.1; ...; U.M.9) from the at least one measuring coil which is caused by the induced eddy currents and is thus suitable for diagnosis of the eddy current brake,
- wherein the at least one excitation coil (11; 111; 211 to 218; 311 to 318; 411; 511 to 514; 611, 612; 711 to 714; 811 to 818; 911 to 918) forms the at least one testing coil and
- wherein the at least one excitation coil (11; 111; 211 to 218; 311 to 318; 811 to 818; 911 to 918) and/or a further excitation coil (412; 515 to 518; 613, 614; 715 to 718) of the eddy current brake forms the at least one measuring coil.

2. Apparatus according to claim 1,
**characterised in that**
the electrical energy source of the rotating eddy current brake forms the electrical signal source of the means for eddy current testing.

3. Apparatus (5; 105; ...; 905) according to claim 1,
**characterised in that**
the electrical energy source (20; 120; ...; 920) of the rotating eddy current brake is embodied separately from the electrical signal source (125; 225; ...; 925) of the means for eddy current testing.

4. Apparatus (5; 105; 205; 305) according to one of claims 1 to 3,
**characterised in that**
- the at least one excitation coil (11; 111; 211 to 218; 311 to 318) forms the testing coil during at least a first diagnosis phase, wherein the signal receiver (127; 227; 327) acquires the testing signal of the electrical signal source (125; 225; 325) during the at least one first diagnosis phase and
- the at least one excitation coil (11; 111; 211 to 218; 311 to 318) forms the at least one measuring coil during at least one second diagnosis phase, which is temporally offset with respect to the at least one first diagnosis phase, wherein the signal receiver (127; 227; 327) acquires the measuring signal during the at least one second diagnosis phase.

5. Apparatus (105) according to claim 4,
**characterised by**
a converter (150), by means of which during the at least one first diagnosis phase the electrical signal source (125) and during the at least one second diagnosis phase the signal receiver (127) are connected to the at least one excitation coil (111).

6. Apparatus (805) according to one of claims 1 to 3,
**characterised in that**
the excitation coils (811 to 818) form the testing coils and the measuring coils during the diagnosis, wherein two resistors (871, 872) and the excitation coils (811 to 814, 815 to 818) are interconnected to form a full bridge and wherein the signal receiver (827) taps the measuring signal from the full bridge in the form of a differential signal.

7. Apparatus (905) according to one of claims 1 to 3,
**characterised in that**
the excitation coils (911 to 918) form the testing coils and the measuring coils during the diagnosis, wherein the excitation coils (911 to 918) are interconnected to form a full bridge and wherein the signal receiver (917) taps the measuring signal from the full bridge in the form of a differential signal.

8. Apparatus (5; 105; ...; 905) according to one of claims 1 to 7,
**characterised by**
an evaluation unit (22; 122; ...; 922), which is actively connected to the signal receiver (127; 227; ...; 927) to evaluate the measuring signals.

9. Assembly (1), in particular rail vehicle, with a rotating element (2), in particular a rotating shaft, and with an apparatus (5; 105; ...; 905) for braking the rotating element, **characterised in that**
the apparatus (5; 105; ...; 905) is embodied according to one of claims 1 to 8.

10. Method for braking a rotating element (2) of an assembly (1), in particular for braking a rotating shaft of a rail vehicle,
- in which a rotor (8; 108; ...; 908) of a rotating eddy current brake (6; 6a; 6b; 6c) is connected to the rotating element (2) in a non-rotating manner,
- in which a stator (9; 109; ....; 909) of the rotating eddy current brake is braced against the assembly (1) and
- in which at least one excitation coil (11; 111; 211 to 218; 311 to 318; 411, 412; 511 to 518; 611, 612, 613, 614; 711 to 718; 811 to 818; 911 to 918) of the stator is supplied by an electrical energy source (20; 120; ...; 920) during braking operation,
**characterised in that**
- means (7; 107; ...; 907) for eddy current testing of the rotating eddy current brake are provided, which have at least one testing coil and one electrical signal source (125; 225; ...; 925) actively connected to the testing coil, as well as at least one measuring coil and one signal receiver (127; 227; ...; 927) actively connected to the measuring coil,
- wherein a testing signal (U.P; U.P.1; ...; U.P.9) is applied to the at least one testing coil by means of the electrical signal source, which testing signal induces eddy currents in the rotor,
- wherein the signal receiver taps a measuring signal (U.M; U.M.1; ...; U.M.9) from the at least one measuring coil which is caused by the induced eddy currents and is thus suitable for diagnosis of the eddy current brake,
- wherein the at least one excitation coil (11; 111; 211 to 218; 311 to 318; 411; 511 to 514; 611, 612; 711 to 714; 811 to 818; 911 to 918) forms the at least one testing coil and
- wherein the at least one excitation coil (11; 111; 211 to 218; 311 to 318; 811 to 818; 911 to 918) and/or a further excitation coil (412; 515 to 518; 613, 614; 715 to 718) of the eddy current brake forms the measuring coil.

11. Method according to claim 10,
**characterised in that**
the electrical energy source (220; 320) of the rotating eddy current brake is also used as the electrical signal source of the means for eddy current testing and to this end the excitation signal of the electrical energy source (220; 320) serving as testing signal is applied to the at least one testing coil (211 to 218; 312 to 318) during the diagnosis.

## Revendications

1. Dispositif (5; 105; ...; 905) de freinage d'un élément (2) tournant d'un ensemble (1), notamment de freinage d'un arbre tournant d'un véhicule ferroviaire,
- comprenant un frein (6; 106; ...; 906; 6a; 6b; 6c) tournant à courants de Foucault, qui a un rotor (8; 108; ...; 908) pouvant être rendu solidaire en rotation de l'élément (2) tournant et un stator (9; 109; ...; 909) pouvant s'appuyer sur l'ensemble, le stator étant pourvu d'au moins une bobine (11; 111; 211 à 218; 311 à 318; 411, 412; 511 à 518; 611, 612, 613, 614; 711 à 718; 811 à 818; 911 à 918) d'excitation alimentée en fonctionnement de frein par une source (20; 120; ...; 920) d'énergie électrique,
**caractérisé par**
des moyens (7; 107; ...; 907) de contrôle des courants de Foucault du frein tournant à courants de Foucault, qui ont au moins une bobine de contrôle et une source de signal électrique coopérant avec la au moins une bobine de contrôle, la source (125; 225; ...; 925) de signal électrique envoyant à la bobine de contrôle, lors d'un diagnostic, un signal (U.P; U.P.1; ...; U.P.9) de contrôle, qui induit des courants de Foucault dans le rotor et il y a au moins une bobine de mesure et un récepteur (127; 227; ...; 927) de signal coopérant avec la au moins une bobine de mesure, le récepteur de signal prélevant, lors du diagnostic de la au moins une bobine de mesure, un signal (U.M; U.M.1; ...; U.M.9) de mesure provoqué par les courants de Foucault induits et propre ainsi au diagnostic du frein à courants de Foucault,
- dans lequel la au moins une bobine (11; 111; 211 à 218; 311 à 318; 411; 511 à 514; 611, 612; 711 à 714; 811 à 818; 911 à 918) d'excitation forme la au moins une bobine de contrôle et
- dans lequel la au moins une bobine (11; 111; 211 à 218; 311 à 318; 811 à 818; 911 à 918) d'excitation et/ou une autre bobine (412; 515 à 518; 613, 614; 715 à 718) d'excitation du frein à courants de Foucault forme la au moins une bobine de mesure.

2. Dispositif suivant la revendication 1,
**caractérisé en ce que**
la source d'énergie électrique du frein tournant à courants de Foucault forme la source de signal électrique des moyens de contrôle des courants de Foucault.

3. Dispositif (5; 105; ...; 905) suivant la revendication 1, **caractérisé en ce que**
la source (20; 120; ...; 920) d'énergie électrique du frein tournant à courants de Foucault est constituée séparément de la source (125; 225; ...; 925) de signal électrique des moyens pour le contrôle des courants de Foucault.

4. Dispositif (5; 105; 205; 305) suivant l'une des revendications 1 à 3,
**caractérisé**
- **en ce que** la au moins une bobine (11; 111; 211 à 218; 311 à 318) d'excitation forme, pendant au moins une première phase de diagnostic, la bobine de contrôle, le récepteur (127; 227; 327) de signal détectant, pendant la au moins une première phase de diagnostic, le signal de contrôle de la source (125; 225; 325) de signal électrique et
- **en ce que** la au moins une bobine (11; 111; 211 à 218; 311 à 318) d'excitation forme, pendant au moins une deuxième phase de diagnostic décalée dans le temps par rapport à la au moins une première phase de diagnostic, la au moins une bobine de mesure, le récepteur (127; 227; 327) de signal détectant le signal de mesure, pendant la au moins une deuxième phase de diagnostic.

5. Dispositif (105) suivant la revendication 4,
**caractérisé par**
un commutateur (150), au moyen duquel, pendant la au moins une première phase de diagnostic, la source (125) de signal électrique et, pendant la au moins une deuxième phase de diagnostic, le récepteur (127) de signal sont raccordés à la au moins une bobine (111) d'excitation.

6. Dispositif (805) suivant l'une des revendications 1 à 3, **caractérisé en ce que**
les bobines (811 à 818) d'excitation forment, lors du diagnostic, les bobines de contrôle et les bobines de mesure, dans lequel deux résistances (871, 872) et les bobines (811 à 814, 815 à 818) d'excitation sont rassemblées en un pont complet et dans lequel le récepteur (827) de signal prélève du pont complet le signal de mesure sous la forme d'un signal de différence.

7. Dispositif (905) suivant l'une des revendications 1 à 3, **caractérisé en ce que**
les bobines (911 à 918) d'excitation forment, lors du diagnostic, les bobines de contrôle et les bobines de mesure, les bobines (911 à 918) d'excitation étant rassemblées en un pont complet et le récepteur (927) de signal prélève du pont complet le signal de mesure sous la forme d'un signal de différence.

8. Dispositif (5; 105; ...; 305) suivant l'une des revendications 1 à 7,
**caractérisé par**
une unité (22; 222; ...; 922) d'exploitation, qui, pour l'exploitation des signaux de mesure, coopère avec le récepteur (127; 227; ...; 927) de signal.

9. Ensemble (1), notamment véhicule ferroviaire, comprenant un élément (2) tournant, notamment un arbre tournant, et un dispositif (5; 105; ...; 905) de freinage de l'élément tournant,
**caractérisé en ce que**
le dispositif (5; 105; ...; 905) est constitué suivant l'une des revendications 1 à 8.

10. Procédé de freinage d'un élément (2) tournant d'un ensemble (1), notamment de freinage d'un arbre tournant d'un véhicule ferroviaire,
- dans lequel on rend un rotor (8; 108; ...; 908) d'un frein (6; 6a, 6b, 6c) tournant à courants de Foucault solidaire en rotation de l'élément (2) tournant,
- dans lequel on appuie un stator (9; 109; ...; 909) du frein tournant à courants de Foucault sur l'ensemble (1) et
- dans lequel on alimente, en fonctionnement en frein, au moins une bobine (11; 111; 211 à 218; 311 à 318; 411, 412; 511 à 518; 611, 612, 613, 614; 711 à 718; 811 à 818; 911 à 918) par une source (20; 120; ...; 920) d'énergie électrique,
**caractérisé en ce que**
- on met à disposition des moyens (7; 107; ...; 907) de contrôle de courants de Foucault du frein tournant à courants de Foucault, qui ont au moins une bobine de contrôle et une source (125; 225; ...; 925) de signal électrique coopérant avec la bobine de contrôle, ainsi qu'au moins une bobine de mesure et un récepteur (127; 227; ...; 927) de signal coopérant avec la bobine de mesure,
- dans lequel la au moins une bobine de contrôle reçoit, au moyen de la source de signal électrique, un signal (U.P; U.P.1; ...; U.P.9) de contrôle, qui induit des courants de Foucault dans le rotor,
- dans lequel le récepteur de signal prélève, de la au moins une bobine de mesure, un signal (U.M; U.M.1; ...; U.M.9) de mesure provoqué par les courants de Foucault induits et propre ainsi au diagnostic du frein à courants de Foucault,
- dans lequel la au moins une bobine (11; 111; 211 à 218; 311 à 318; 411; 511 à 514; 611, 612; 711 à 714; 811 à 818; 911 à 918) d'excitation forme la au moins une bobine de contrôle et
- dans lequel la au moins une bobine (11; 111; 211 à 218; 311 à 318; 811 à 818; 911 à 918) d'excitation et/ou une autre bobine (412; 515 à 518; 613, 614; 715 à 718) d'excitation du frein à courants de Foucault forme la au moins une bobine de mesure.

11. Procédé suivant la revendication 10,
**caractérisé en ce que**
on utilise la source (220; 320) d'énergie électrique du frein tournant à courants de Foucault, également comme source de signal électrique des moyens de contrôle de courants de Foucault et, à cet effet, on envoie, à la au moins une bobine (211 à 218; 312 à 318) de contrôle lors du diagnostic, le signal d'excitation, servant de signal de contrôle, de la source (220; 320) d'énergie électrique.
